# EUROPEAN PATENT APPLICATION

(11) **EP 1 528 734 A1**
(43) Date of publication of application: **04.05.2005**
(21) Application number: 04256638.0
(22) Date of filing: 27.10.2004
(51) Int. Cl.: H04L 12/56

(54) **Delay control in a data communication system**

(30) Priority: 28.10.2003 JP 2003367038
(71) Applicant: Pioneer Corporation, Tokyo 153-8654 (JP)
(72) Inventor: Ohkawa, Kenichi, c/o Pioneer Corporation, Tokorozawa-shi, Saitama 359-8522 (JP)
(74) Representative: Haley, Stephen

(57) **Abstract**

A data transmitting device (300) adapted to transmit audio data to a plurality of audio reproducers for outputting audio data includes a delay amount determiner (330), which calculates the delay time as the transmission time of the audio data to each of the audio reproducers, and a delay amount controller (360), which controls, when transmitting the audio data to each of the audio reproducers via the network, to delay the audio data to be transmitted to each of the audio reproducers based on the delay time.

## Description

The present invention relates to a data transmitting device adapted to transmit data to a plurality of output devices connected therewith via a network for outputting the data, a data transmitting system, a data transmitting method and a data transmitting program as well as a recording medium storing the program.

Conventionally, a configuration, in which audio data transmitter for transmitting audio data and audio reproducer for outputting the audio data transmitted from the audio data transmitter as sounds are connected to each other via a network, is known (for example, Document 1: Japanese Unexamined Patent Publication No. 2001-298444, refer to paragraph No. 0036 and Fig. 1). In the configuration according to the document 1, a CD player and a tuner as the audio data transmitter and a speaker as the audio reproducer are connected to each other via a serial bus as the network. In such configuration, when a plurality of speakers is connected to the tuner, such configuration that the serial buses are connected from the tuner to each of the speakers is conceivable.

When the serial buses are connected to each of the speakers, which are disposed in different distances from the tuner, it is conceivable such configuration that serial buses having different length corresponding to the distance from the tuner are connected to each of the speakers. However, in the above configuration, when audio data are output synchronously to each of the speakers from the tuner, generally, the transmission time of the audio data is proportional to the length of the serial buses. Accordingly, the times the audio data reach to each of the speakers differ from each other. As a result, sounds output from each of the speakers become asynchronous. Therefore, it is desired to provide such configuration that sounds are output synchronously from each of the speakers.

An object of the present invention is to provide a data transmitting device capable of causing a plurality of output devices connected therewith to output data via a network at the same time, a data transmitting system, a data transmitting method and a data transmitting program as well as a recording medium storing the program.

A data transmitting device according to an aspect of the present invention for transmitting data to a plurality of output devices for outputting the data via a network, the device includes: a transmission time determiner for calculating transmission time of the data for each of the output devices; and a transmission controller for, when transmitting the data to each of the output devices via the network, controlling to delay the data to be transmitted to each of the output devices based on the transmission time.

A data processing system according to another aspect of the present invention includes: the above-described data transmitting device; and a plurality of output devices, which is connected to the data transmitting device via the network so as to transmit and receive various kinds of information and provided with a data output section for acquiring the data to be transmitted from the data transmitting device and outputting the data therefrom.

A data processing system according to still another aspect of the present invention includes: the above-described data transmitting device; and a plurality of output devices, which is connected to the data transmitting device via the network so as to transmit and receive various kinds of information, including an confirmation information generator for acquiring the confirmation request information transmitted from the data transmitting device and generating the reception confirmation information to transmit the information to the data transmitting device, and a data output section for acquiring the data transmitted from the data transmitting device and outputting the data therefrom.

A data processing system according to a further aspect of the present invention includes: the above-described data transmitting device; and a plurality of output devices, which is connected to the data transmitting device via the network so as to transmit and receive various kinds of information, including a reception information generator for, when the data transmitted from the data transmitting device are received, generating the data reception information and transmitting the information to the data transmitting device, and a data output section for outputting the data therefrom.

A data processing system according to a still further aspect of the present invention includes: the above-described data transmitting device; and a plurality of output devices, which is connected to the data transmitting device via the network so as to transmit and receive various kinds of information, including a divided data receiver for receiving the plurality of divided data transmitted from the data transmitting device, a data generator for generating the data by combining the plurality of divided data with each other, and a data output section for outputting the data therefrom.

A data processing system according to a yet further aspect of the present invention includes: the above-described data transmitting device; and a plurality of output devices, which is connected to the data transmitting device via the network so as to transmit and receive various kinds of information, including a frame data receiver for receiving the plurality of frame data transmitted from the data transmitting device, a divided data acquiring section for identifying and acquiring the divided data from the plurality of frame data, a data generator for generating the data by combining the plurality of divided data with each other, and a data output section for outputting the data therefrom.

A data processing method of transmitting data to a plurality of output devices for outputting the data via a network according to a yet further aspect of the present invention, the method includes the steps of: calculating transmission time of the data to each of the output devices; and when transmitting the data to each of the output devices via the network, controlling to delay the data to be transmitted to each of the output devices based on the transmission time.

A data processing program according to a yet further aspect of the present invention executes the above-described data processing method by a computing unit.

A recording medium according to a yet further aspect of the present invention stores the above-described data processing program in a manner readable by a computing unit.

In the drawings:
Fig. 1 is a block diagram schematically showing the configuration of the AV data reproduction system according to an embodiment of the present invention;
Fig. 2 is a block diagram schematically showing the configuration of a data transmitting device in the embodiment;
Fig. 3 is a conceptual diagram schematically showing the configuration of frame data, which are transmitted from the data transmitting device in the embodiment, particularly, part (A) is a conceptual diagram showing a generating processing of frame data in the case where all of the differential times Tz are 0 msec; and part (B) is a conceptual diagram showing a generating processing of frame data in the case where at least any one of differential times Tz is not 0 msec;
Fig. 4 is a conceptual diagram schematically showing the configuration of frame data in the embodiment;
Fig. 5 is a block diagram schematically showing a configuration of an audio reproducer in the embodiment;
Fig. 6 is a flowchart showing the frame data transmitting process in the data transmitting device according to the embodiment; and
Fig. 7 is a flowchart showing the frame data receiving process in the audio reproducer according to the embodiment.

Hereinafter, one embodiment of the present invention will be described with reference to the drawings. In the present embodiment, an AV data reproduction system will be exemplified. In the example, a data transmitting device appropriately divides AV (Audio Video) data into a plurality of pieces of data to generate frame data; and based on the generated frame data and the like, the AV data are reproduced by a plurality of data reproducing devices. But the present invention is not limited to the above.

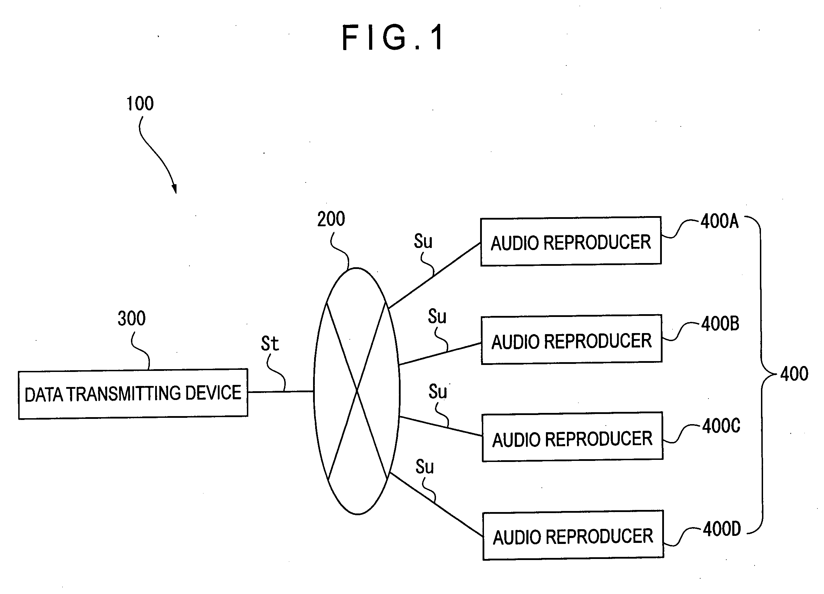

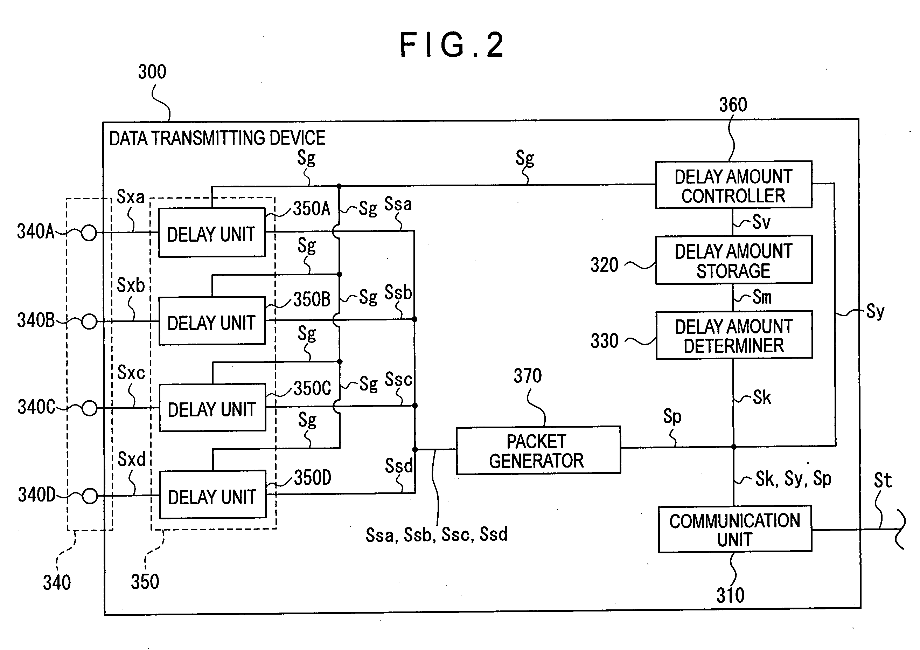

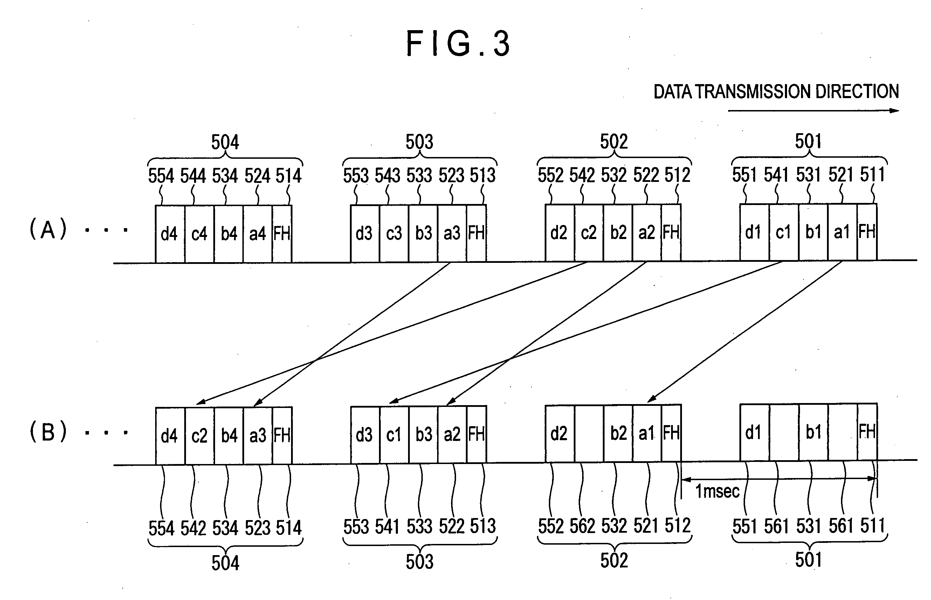

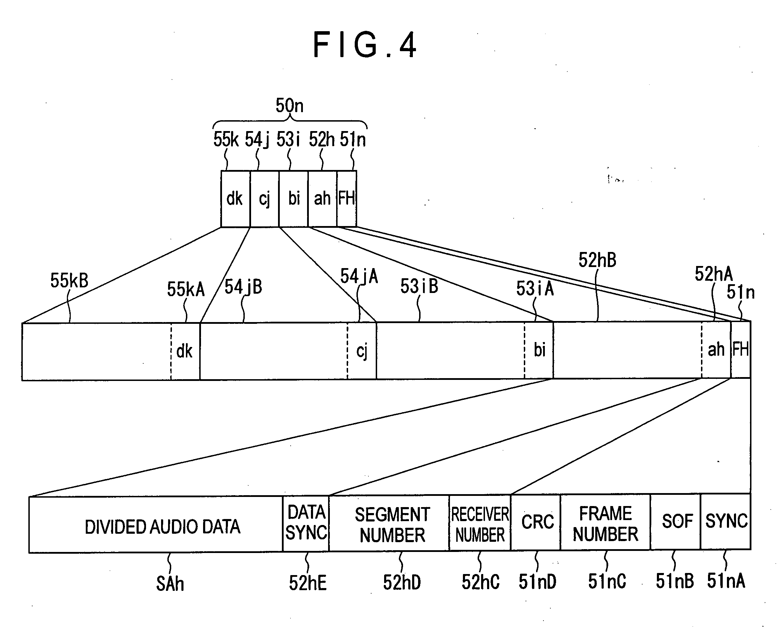

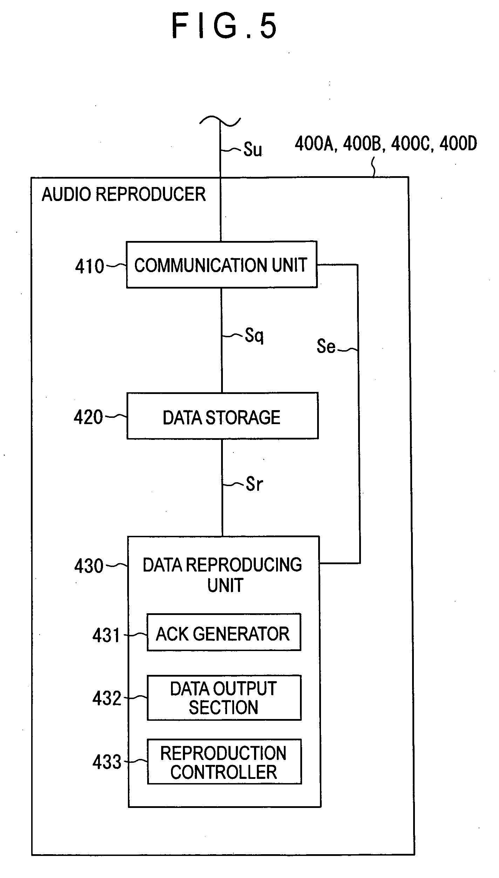

Fig. 1 is a block diagram schematically showing the configuration of the AV data reproduction system according to the embodiment. Fig. 2 is a block diagram schematically showing the configuration of a data transmitting device. Fig. 3 is a conceptual diagram schematically showing the configuration of frame data, which are transmitted from the data transmitting device; particularly, part (A) is a conceptual diagram showing a generating processing of frame data in the case where every differential time Tz is 0 msec; and part (B) is a conceptual diagram showing a generating processing of frame data in the case where at least any one of differential times Tz is not 0 msec. Fig. 4 is a conceptual diagram schematically showing the configuration of the frame data. And Fig. 5 is a block diagram schematically showing a configuration of an audio reproducer.

### [Configuration of AV Data Reproduction System]

In Fig. 1, reference numeral 100 denotes an AV data reproduction system as a data processing system. The AV data reproduction system (hereinafter, abbreviated to as reproduction system) 100 is a system for reproducing AV data, which are input from, for example, unshown AV data output equipment. The reproduction system 100 includes a network 200, a data transmitting device 300, an audio reproducer 400A as an output device, and an audio reproducer 400B as an output device, an audio reproducer 400C as an output device, an audio reproducer 400D as an output device and an unshown image reproducer. Hereinafter, when the audio reproducers 400A, 400B, 400C and 400D are described as a collective, these reproducers will be occasionally referred to as audio reproducer set 400. Also, in this embodiment, a configuration will be exemplified in which the audio reproducer set 400 includes four audio reproducers. But if the number of the audio reproducer is a plural number, the number of the audio reproducer in the audio reproducer set 400 is not limited to four, but the number thereof may be five or more, or three or two.

The network 200 is connected to a data transmitting device 300, the audio reproducers 400A, 400B, 400C and 400D, and the unshown image reproducer. The network 200 connects the data transmitting device 300, the audio reproducer set 400 and the image reproducer in a state that information can be transmitted and received. As the network 200, for example, LAN (Local Area Network) such as intranet, extranet and Ethernet (TM) based on multipurpose protocol suite such as TCP/IP (Transmission Control Protocol/ Internet Protocol), a radio LAN complying IEEE (Institute of Electrical and Electronics Engineers) 802.1 X-Standard, a radio transmission network employing Bluetooth (TM), which is a near field communication and protocol, a network such as communication line network and broadcast network in which a plurality of base stations capable of transmitting and receiving information via radio medium form a network, and further, radio medium itself or cable medium itself which serves as a medium for directly transmitting and receiving information among the data transmitting device 300, the audio reproducers 400A, 400B, 400C, 400D and the image reproducer are exemplified. Here, as the radio medium, any of the media such as electric wave, light, acoustic wave, electromagnetic wave is applicable. Also, as the cable medium, any medium such as cable, electricity wire, telephone cable complying with USB (Universal Serial Bus) standard and/or IEEE 1394 standard is applicable.

The data transmitting device 300 appropriately processes audio data SA, SB, SC and SD as the data of the AV data, which are input from the AV data output equipment, and transmits the data timely to the audio reproducers 400A, 400B, 400C and 400D. These audio data SA, SB, SC and SD are the data, for example, in one music composition, which are output as the sound respectively from the audio reproducers 400A, 400B, 400C and 400D. Also, the data transmitting device 300 appropriately processes the image data of the AV data, which are input from the AV data output equipment, and transmits the data timely to the image reproducer. As shown in Fig. 2, the data transmitting device 300 includes a communication unit 310, a delay amount storage 320 as a memory, a delay amount determiner 330 as a transmission time determiner, an audio data input unit 340 as a data acquiring section, a delay processor 350, a delay amount controller 360 as a transmission controller, a packet generator 370 as a divided data generator, an unshown image data transmitter, and the like.

The communication unit 310 is connected to the audio reproducers 400A, 400B, 400C, 400D and the image reproducer via the network 200; and further, connected to the delay amount determiner 330 and the packet generator 370. The communication unit 310 is capable of receiving a transmission signal St from the audio reproducer set 400 and the image reproducer via the network 200. When acquiring the transmission signal St, the communication unit 310 carries out a preset input interface processing to output a determination signal Sk to the delay amount determiner 330, or a packet signal Sp to the packet generator 370. Also, when acquiring the determination signal Sk from the delay amount determiner 330 or the packet signal Sp from the packet generator 370, the communication unit 310 carries out a preset output interface to transmit the signal as the transmission signal St timely to the audio reproducer set 400 via the network 200. Further, when acquiring an image data signal from the image data transmitter, the communication unit 310 carries out a preset output interface to transmit the signal as an image data transmission signal timely to the image reproducer via the network 200.

The delay amount storage 320 is connected to the delay amount determiner 330 and the delay amount controller 360. The delay amount storage 320 stores various kinds of information about the transmission time of the audio data to the audio reproducer set 400, which is generated by the delay amount determiner 330, so as to be read out timely. As for the delay amount storage 320, a DRAM (Dynamic Random Access Memory) or SRAM (Static Random Access Memory) is exemplified. Also, the delay amount storage 320 stores various kinds of programs and the like for controlling the operation of the entire data transmitting device 300.

The delay amount determiner 330 is a program. The delay amount determiner 330 generates various kinds of information about the transmission time of the audio data to the audio reproducer set 400, and causes the delay amount storage 320 to store the generated various kinds of information. Specifically, the delay amount determiner 330 generates ACK request information as confirmation request information, which requests the audio reproducer set 400 to transmit an ACK (Acknowledge) as reception confirmation information, which will be described later. And the delay amount determiner 330 appropriately converts the ACK request information to the determination signal Sk, and outputs the signal to the communication unit 310. In the following description, the processing to output the ACK request information will be occasionally referred to as processing to carry out polling.

After that, based on the determination signal Sk input from the communication unit 310, the delay amount determiner 330 recognizes the ACK written in the determination signal Sk. And the delay amount determiner 330 recognizes that the device, which has transmitted the ACK, for example, is the audio reproducer 400A, based on the inherent information-to-device written in the ACK, which will be described later. Further, the delay amount determiner 330 recognizes necessary time from a point of time when the ACK request information is output to a point of time when the ACK is acquired based on the time measured by an unshown timer, and recognizes a half value of the recognized necessary time as a delay time Da for the transmission time of the audio reproducer 400A. The delay amount determiner 330 appropriately converts the recognized delay time Da to a memory signal Sm, and causes the delay amount storage 320 to store the signal so as to be read out appropriately. Further, the delay amount determiner 330 carries out the same processing as the above to recognize the delay times Db, Dc and Dd as the transmission time of the audio reproducers 400B, 400C and 400D, and appropriately converts the recognized delay times Db, Dc and Dd to the memory signals Sm, and causes the delay amount storage 320 to store the signals so as to be read out appropriately. Hereinafter, when the delay times Da, Db, Dc and Dd are described as a collective, these delay times will be occasionally referred to as delay times Dz.

When the delay amount determiner 330 recognizes that all of the delay times Da, Db, Dc and Dd have been stored in the delay amount storage 320, the delay amount determiner 330 reads out the delay times Da, Db, Dc and Dd stored in the delay amount storage 320 as the memory signals Sm. After that, the delay amount determiner 330 determines the delay time, which has the longest time in the read out delay times Da, Db, Dc and Dd as a reference time Dx. The delay amount determiner 330 calculates a difference between the reference time Dx and, for example, the delay time Da, and recognizes the calculated value as the differential time Ta of the audio reproducer 400A. After that, the delay amount determiner 330 appropriately converts the recognized differential time Ta to a memory signal Sm and causes the delay amount storage 320 to store the memory signal Sm so as to be read out timely. Further, the delay amount determiner 330 carries out the same processing as the above; thereby, it calculates the differential times Tb, Tc and Td of the audio reproducers 400B, 400C and 400D, appropriately, converts these calculated differential times Tb, Tc and Td to the memory signals Sm, and causes the delay amount storage 320 to store so as to be read out timely. Hereinafter, when the differential times Ta, Tb, Tc and Td are described as a collective, these differential times will be occasionally referred to as differential times Tz.

The delay amount determiner 330 timely acquires current time from the timer. When the delay amount determiner 330 recognizes that a preset time Ts has passed, the delay amount determiner 330 deletes the delay times Dz and the differential times Tz stored in the delay amount storage 320. Hereinafter, when the delay times Dz and the differential times Tz are described as a collective, these delay times Dz and the differential times Tz will be occasionally referred to as transmission time information.

The audio data input unit 340 includes an audio input terminal 340A, an audio input terminal 340B, an audio input terminal 340C and an audio input terminal 340D. The audio input terminal 340A includes, for example, a connector, which is connected detachably with not shown plug, a terminal, which is connected with a lead wire, and the like. An AV data output equipment, which outputs the AV data, is connected detachably to the audio input terminal 340A, and output signal Sxa, which is written with audio data SA of the AV data to be output from the AV data output equipment, is input therefrom. The audio input terminals 340B, 340C and 340D are also constituted in the same manner as the audio input terminal 340A. To these audio input terminals 340B, 340C and 340D, the output signals Sxb, Sxc and Sxd written with the audio data SB, SC and SD of the AV data, which are output synchronously along with the output signal Sxa from the AV data output equipment, are input respectively.

Based on output request information, which will be described later; the delay processor 350 appropriately delays the audio data SA, SB, SC and SD, which are synchronously input from the audio data input unit 340, i.e., at times appropriately different from each other, and outputs the data to the packet generator 370. The delay processor 350 includes a delay unit 350A, a delay unit 350B, a delay unit 350C and a delay unit 350D respectively as a program.

The delay unit 350A is connected to the audio input terminal 340A, the delay amount controller 360 and the packet generator 370. The delay unit 350A timely acquires the output signal Sxa, which is input to the audio input terminal 340A, and temporarily stores the audio data SA written in the acquired output signal Sxa. Then, based on a process signal Sg, which is input from the delay amount controller 360, the delay unit 350A recognizes the output request information written in the process signal Sg. And the delay unit 350A appropriately converts the audio data SA to a data signal Ssa, and outputs the signal to the packet generator 370 at a time written in the output request information.

The delay unit 350B is connected to the audio input terminal 340B, the delay amount controller 360 and the packet generator 370. The delay unit 350C is connected to the audio input terminal 340C, the delay amount controller 360 and the packet generator 370. The delay unit 350D is connected to the audio input terminal 340D, the delay amount controller 360 and the packet generator 370. These delay units 350B, 350C and 350D timely acquire the output signals Sxb, Sxc and Sxd, which are input to the audio input terminals 340B, 340C and 340D, and temporarily store the audio data SB, SC and SD written in the acquired output signal Sxb, Sxc and Sxd. And the same processing as that on the delay unit 350A is carried out based on the process signal Sg, which is input from the delay amount controller 360. That is, the audio data SB, SC and SD are timely converted to the data signals Ssb, Ssc and Ssd, and output to the packet generator 370 at the time written in the output request information.

The delay amount controller 360 is a program. The delay amount controller 360 generates output request information based on the differential times Tz stored in the delay amount storage 320, and outputs the information to the delay processor 350. Specifically, when the delay amount controller 360 recognizes that the differential times Tz have been stored in the delay amount storage 320, the delay amount controller 360 reads out the differential times Tz as a memory signal Sv respectively. When all of the differential times Ta, Tb, Tc and Td written in the memory signals Sv are, for example, 0 msec, the following output request information is generated. That is, the output request information, which is written with information requesting to output the data signals Ssa, Ssb, Ssc and Ssd written with the audio data SA, SB, SC and SD to the delay unit 350A, 350B, 350C and 350D at an arbitrary time, is generated. In the following description, the arbitrary time will be occasionally referred to as signal output reference time.

When at least any one of the differential times Tz written in the above-mentioned read out memory signal Sv is not 0 msec, for example, when the differential time Ta is 1 msec, the differential times Tb and Td are 0 msec, and the differential time Tc is 2 msec, the delay amount controller 360 generates the following output request information. That is, the following output request information is generated; i.e., information requesting to output the data signal Ssa written with the audio data SA to the delay unit 350A 1 msec later from the signal output reference time; information requesting to output the data signals Ssb and Ssd written with the audio data SB and SD to the delay units 350B and 350D at the signal output reference time; and information requesting to output the data signal Ssc written with the audio data SC to the delay unit 350C 2 msec later from the signal output reference time. The delay amount controller 360 converts the generated output request information appropriately to the process signal Sg, and outputs the signal to the delay units 350A, 350B, 350C and 350D.

The packet generator 370 is a program. The packet generator 370 generates frame data 50n, 50(n+1),... (n is a natural number) sequentially as shown in the parts (A) and (B) in Fig. 3 based on the audio data SA, SB, SC and SD output from the delay processor 350, and transmits the data to the audio reproducer set 400.

Here, first of all, the configuration of the frame data 50n will be described. As shown in Fig. 4, the frame data 50n includes a frame header 51n (n is a natural number), a packet data 52h (h is a natural number), a packet data 53i (i is a natural number), a packet data 54j (j is a natural number) and a packet data 55k (k is a natural number). The packet data 52h, 53i, 54j and 55k have substantially the same configuration each other. Therefore, the packet data 52h will be described in detail below.

In the frame header 51n, various kinds of information about the frame data 50n are stored. Specifically, the frame header 51n stores sync (synchronous) 51nA (n is a natural number), which is a signal for synchronizing, SOF (Start Of Frame) 51nB (n is a natural number) indicating the head of the frame data 50n, frame number 51nC (n is a natural number) indicating that the frame data 50n are the n-th frame data, and CRC (Cyclic Redundancy Check character) 51nD (n is a natural number), which is a signal for detecting transmission error.

The packet data 52h are data used for output processing of the audio data SA in the audio reproducer 400A. The packet data 52h includes a segment-determining data area 52hA in which information about the packet data 52h is stored, and an AV data area 52hB in which information about the audio data SA to be output by the audio reproducer 400A is stored. Specifically, in the AV data area 52hB, divided audio data SAh (h is a natural number) as a divided data, which are a partial data of the audio data SA output from the delay unit 350A, and data sync (Data Synchronous) 52hE, which is a signal indicating the start of a divided audio data SAh, are stored. In the segment-determining data area 52hA, receiver number 52hC, which is, for example, an ID (Identification) number for identifying the audio reproducer 400A, and segment number 52hD as order information indicating that the divided audio data SAh are the h-th data from the head of the audio data SA are stored.

The packet data 53i, 54j and 55k are the data used for output processing of the audio data SB, SC and SD in the audio reproducers 400B, 400C and 400D. The packet data 53i, 54j and 55k include, the segment-determining data area 53iA, 54jA and 55kA stored with, same as the segment-determining data area 52hA, various kinds of information, and AV data area 53iB, 54jB and 55kB stored with, same as the AV data area 52hB, various kinds of information such as, for example, divided audio data SBi (i is a natural number), SCj (j is a natural number) and SDk (k is a natural number) as the divided data.

The packet data 52h, 53i, 54j and 55k may have such configuration that various kinds of information is not stored in each of the data areas 52hA, 52hB, 53iA, 53iB, 54jA, 54jB, 55kA or 55kB. In the following description, the packet data 52h, 53i, 54j and 55k with the configuration-stored with no various kinds of information will be occasionally referred to as idle packet data 56n. Also, the configuration of the frame data 50n is not limited to the above-described configuration, but another appropriate configuration may be employed.

Next, the process to generate the frame data 50n in the packet generator 370 will be described. Here, first of all, referring to the part (A) in Fig. 3, the generating processing of the frame data 50n, in the case where all of the differential times Ta, Tb, Tc and Td are 0 msec, i.e., the delay units 350A, 350B, 350C and 350D output data signals Ssa, Ssb, Ssc and Ssd at the signal output reference time, will be described.

The packet generator 370 carries out a processing to recognize whether or not at least any one of the data signals Ssa, Ssb, Ssc and Ssd is acquired from the delay processor 350. In this case, since the data signals Ssa, Ssb, Ssc and Ssd are output from the delay units 350A, 350B, 350C and 350D at the signal output reference time, the packet generator 370 recognizes that the data signals Ssa, Ssb, Ssc and Ssd have been acquired synchronously after a predetermined time elapsed from the signal output reference time. In the following description, the time after a predetermined time elapsed from the signal output reference time will be occasionally referred to as signal acquiring time. The packet generator 370 recognizes, for example, the acquired audio data SA written in the data signal Ssa, and reads out the data of predetermined data amount from the head position of the recognized audio data SA as divided audio data SA1. After that, data sync 521E, receiver number 521C and segment number 521D corresponding to the divided audio data SA1 are generated respectively, and packet data 521, which store these various kinds of information, are generated. Also, the packet generator 370 recognizes the audio data SB, SC and SD written in the acquired data signals Ssb, Ssc and Ssd. And the packet generator 370 carries out the same processing as the above to generate the packet data 521, and generates the packet data 531, 541 and 551 stored with the divided audio data SB1, SC1 and SD1 respectively.

Further, the packet generator 370 generates a frame header 511. And a frame data 501, which store the frame header 511 and packet data 521, 531, 541 and 551, are generated, and the generated frame data 501 are timely converted to a packet signal Sp and outputted to the communication unit 310. In the following description, the time when the frame data 501 are output will be occasionally referred to as frame output time.

Then, the packet generator 370 carries out the above-described processing to generate frame data 502, and outputs the data to the communication unit 310, for example, 1 msec later from the frame output time. Specifically, for example, the data of the predetermined data amount are read out as the divided audio data SA2 from the tail position of the divided audio data SA1 in the audio data SA. And packet data 522, which stores the read out divided audio data SA2 and the like, are generated. Further, the packet generator 370 carries out the same processing to generate packet data 532, 542 and 552 stored with the divided audio data SB2, SC2 and SD2 and the like. After that, a frame header 512 is generated, and the frame data 502 stored with the generated frame header 512 and packet data 522, 532, 542 and 552, are generated. And the packet generator 370 converts the generated frame data 502 to the packet signal Sp and outputs the signal to the communication unit 310 1 msec later from the frame output time.

After that, the packet generator 370 generates the frame data 503 and 504 ... sequentially, and outputs these generated frame data 503 and 504 ... sequentially to the communication unit 310 every 1 msec. Here, the configuration in which the frame data 50n are output every 1 msec is exemplified. However, the configuration is not limited to the above. Such configuration in which the frame date are output, for example, every 5 msec or 10 msec may be adopted.

Next, the generating processing of the frame data 50n in the case where at least any one of the differential times Ta, Tb, Tc and Td is not 0 msec; i.e., in the case where the data signal Ssa, Ssb, Ssc and Ssd are not output synchronously from the delay units 350A, 350B, 350C and 350D will be described. Here, the following will be exemplified. That is, a case where the differential time Ta is 1 msec, the differential times Tb and Td are 0 msec, the differential time Tc is 2 msec; i.e., the delay units 350B and 350D output the data signals Ssb and Ssd at the signal output reference time; the delay unit 350A outputs the data signal Ssa 1 msec later from the signal output reference time; and the delay unit 350C outputs the data signal Ssc 2 msec later from the signal output reference time.

The packet generator 370 carries out a processing to recognize whether or not at least any one of the data signals Ssa, Ssb, Ssc and Ssd is acquired from the delay processor 350. In this example, since the data signals Ssb and Ssd are output from the delay units 350B and 350D at the signal output reference time, the packet generator 370 recognizes that the data signals Ssb and Ssd have been acquired after a predetermined time elapsed from the signal output reference time. In the following description, the time after a predetermined time elapsed from the signal output reference time will be occasionally referred to as signal acquiring time. The packet generator 370 recognizes the audio data SB and SD, which are written in the acquired data signals Ssb and Ssd, and reads out the data of predetermined data amount from the head position of these recognized audio data SB and SD as the divided audio data SB1 and SD1. After that, data sync 531E and 551E, receiver number 531C and 551C, and segment number 531D and 551D corresponding to the divided audio data SB1 and SD1 are generated respectively, and packet data 531 and 551 stored with these various kinds of information are generated. Also, since the data signals Ssa and Ssc are not acquired, the packet generator 370 generates packet data 52h and 54j, in which various kinds of information are not stored, i.e., two idle packet data 561.

After that the packet generator 370 generates the frame header 511. The frame data 501, in which the frame header 511, the packet data 531 and 551 and two idle packet data 561 are stored, are generated, and the generated frame data 501 is converted timely to the packet signal Sp, and outputted to the communication unit 310. In the following description, the time when the frame data 501 are output will be occasionally referred to as frame output time.

Then, the packet generator 370 carries out the same processing as described above; thereby, the frame data 502 are generated and output to the communication unit 310, for example, 1 msec later from the frame output time. Specifically, the packet generator 370 carries out a processing to recognize whether or not at least any one of the data signals Ssa and Ssc, which have not been acquired from the delay processor 350, is acquired 1 msec later from the signal acquiring time. Here, the packet generator 370 recognizes that the data signal Ssa, which is output from the delay unit 350A 1 msec later from the signal output reference time, has been acquired. The packet generator 370 recognizes the audio data SA written in the data signal Ssa, and reads out the data of the predetermined data amount as the divided audio data SA1 from the head position of the recognized audio data SA. And the packet data 521, which store the read out divided audio data SA1 and the like, are generated. Also, data of the predetermined data amount are read out from the tail position of the divided audio data SB1 and SD1 in the audio data SB and SD as the divided audio data SB2 and SD2. And, the packet data 532 and 552, which store these read out divided audio data SB2 and SD2 and the like, are generated. Further, since the packet generator 370, which does not acquire the data signal Ssc, generates a packet data 54j, in which no various kinds of information is stored, i.e., one idle packet data 562. And the frame header 512 is made to generate, and then the frame data 502, in which the generated frame header 512, packet data 521, 532, 552 and one idle packet data 562 are stored, is made to generate. After that, the frame data 502 are made to convert appropriately to the packet signal Sp, and the packet signal Sp is made to output to the communication unit 310 1 msec later from the frame output time.

Furthermore, the packet generator 370 carries out the same processing as described above to generate the frame data 503, and outputs the data to the communication unit 310, for example, 2 msec later from the frame output time. Specifically, 2 msec later from the signal acquiring time, the packet generator 370 carries out a processing to recognize whether or not the data signal Ssc, which have not been acquired yet, is acquired from the delay processor 350. Here, the packet generator 370 recognizes that data signal Ssc, which are output from the delay unit 350C 2 msec later form the signal output reference time, has been acquired. The packet generator 370 recognizes the audio data SC, which are written in the data signal Ssc, and reads out the data of the predetermined data amount as the divided audio data SC1 from the head position of the recognized audio data SC. Thus, the packet data 541, which stores the read out divided audio data SC1 and the like, are generated. And the packet generator 370 reads out data of the predetermined data amount as the divided audio data SA2, SB3 and SD3 from the tail position of the divided audio data SA1, SB2 and SD2 in the audio data SA, SB and SD. After that, the packet data 522, 533 and 553, which store these read out divided audio data SA2, SB3 and SD3, are generated. And the frame header 513 is generated; and thus the frame data 503, which stores these generated frame header 513, packet data 522, 533, 541 and 553, are generated. After that, the frame data 503 are converted timely to the packet signal Sp and output to the communication unit 310 2 msec later from the frame output time.

The packet generator 370 generates the frame data 504, ... sequentially, and these generated frame data 504, ... are output sequentially to the communication unit 310 every 1 msec. Here, the configuration in which the frame data 50n are output every 1 msec, is exemplified. However, the configuration is not limited to the above. For example, such configuration that the frame data 50n are output every 5 msec or 10 msec may be adopted.

Further, the packet generator 370 appropriately recognizes a reception complete signal as data reception information, which will be described later, written in the packet signal Sp based on this packet signal Sp input from the communication unit 310. Based on the inherent information-to-device written in the reception complete signal, the packet generator 370 recognizes that the device, which has transmitted the reception complete signal, is, for example, the audio reproducer 400A. And based on the reception frame information written in the reception complete signal, the packet generator 370 recognizes the frame data 50n received by the audio reproducer 400A. And the packet generator 370 determines whether or not, for example, the reception complete signal, which is written with reception frame information indicating the fact that the frame data 501 are received, has acquired from the audio reproducer set 400 in a predetermined time. After that, when it is determined that the reception complete signal has been acquired from audio reproducer set 400, no particular processing is carried out. On the other hand, when it is determined that the reception complete signal has failed to be acquired from the audio reproducer set 400, the frame data 501 are converted to the packet signal Sp and outputted to the communication unit 310 again. The packet generator 370 carries out the same processing as the above on the frame data 502, 503, ..., and outputs the frame data 502, 503, ... appropriately to the communication unit 310.

The audio reproducers 400A, 400B, 400C and 400D are connected to the data transmitting device 300 via the network 200 so that various kinds of information can be transmitted and received therebetween. Since the audio reproducers 400A, 400B, 400C and 400D have the same configuration each other, the audio reproducer 400A will be described below.

The audio reproducer 400A acquires the frame data 50n, which are transmitted from the data transmitting device 300, and outputs the audio data SA appropriately based on the acquired frame data 50n. As shown in Fig. 5, the audio reproducer 400A includes a communication unit 410, a data storage 420, a data reproducing unit 430 and the like.

The communication unit 410 is connected to the data transmitting device 300 via the network 200 as well as the data storage 420 and the data reproducing unit 430. The communication unit 410 receives a reception signal Su from the data transmitting device 300 via the network 200. When the frame data 50n are written in the received reception signal Su, the frame data 50n are appropriately converted to memory signals Sq and outputted to the data storage 420. When ACK request information is written in the received reception signal Su, the ACK request information is appropriately converted to reproduction signal Se and outputted to the data reproducing unit 430. Also, when the communication unit 410 acquires the reproduction signal Se from the data reproducing unit 430, the communication unit 410 carries out a preset output interface to transmit the reception signal Su to the data transmitting device 300 via the network 200.

The data storage 420 is connected to the data reproducing unit 430. The data storage 420 stores the frame data 50n so as to be read out appropriately. As for the data storage 420, a DRAM (Dynamic Random Access Memory), a SRAM (Static Random Access Memory), or the like may be exemplified. Also, the data storage 420 stores various kinds of programs and the like for controlling the operation of the entire audio reproducer 400A.

The data reproducing unit 430 includes a various kinds of programs such as an ACK (Acknowledge) generator 431 as an confirmation information generator, a data output section 432 and a reproduction controller 433 as a reception information generator, a frame data receiver, a divided data acquiring section and a data generator.

The ACK generator 431 generates, so to speak, an ACK, which is a piece of information indicating the fact that ACK request information transmitted from the data transmitting device 300 has been acquired. Specifically, based on the reproduction signal Se input from the communication unit 410, the ACK generator 431 recognizes the ACK request information written in the reproduction signal Se. And the ACK generator 431 generates ACK including information indicating the fact that the ACK request information has been acquired, the inherent information-to-device for identifying the audio reproducer 400A and the like. After that, the generated ACK is appropriately converted to a reproduction signal Se and outputted to the communication unit 410.

The data output section 432 has a sound generator such as, for example, unshown speaker. The data output section 432 is controlled by the reproduction controller 433 to output audio data SA as sounds via the sound generator.

The reproduction controller 433 timely reads out the divided audio data SAh, SA(h+1), ... included in the frame data 50n, 50(n+1), ... stored in the data storage 420. The reproduction controller 433 timely carries out a processing to combine these read out divided audio data SAh, SA(h+1), ... with each other and controls the data output section 432 to output the data as the audio data SA. Specifically, the reproduction controller 433 timely reads out the frame data 50n, 50(n+1), ... stored in the data storage 420 as a memory signal Sr. Based on the receiver numbers 52hC, 52(h+1)C, ... of the read out frame data 50n, 50(n+1), ..., the packet data 52h, 52(h+1), ... are identified and appropriately acquired. After that, based on the order indicated by the segment numbers 52hD, 52(h+1)D, ... of these acquired packet data 52h, 52(h+1), ..., the divided audio data SAh, SA(h+1), ... are appropriately combined with each other and output by the data output section 432 as the audio data SA.

The reproduction controller 433 generates inherent information-to-device for identifying the audio reproducer 400A and reception complete signal having reception frame information indicating the fact that, for example, the frame data 501 has been received. After that, the generated reception complete signal is timely converted to reproduction signal Se and output to the communication unit 410. The reproduction controller 433 timely generates a reception complete signal written with reception frame information indicating the fact that the frame data 50n has been received and the like and timely outputs the signal to the communication unit 410.

The image reproducer is connected to the data transmitting device 300 via the network 200 so that various kinds of information can be transmitted and received therebetween. The image reproducer includes an unshown communication unit, a data storage, a data reproducing unit and the like. The communication unit acquires image data transmitted from the data transmitting device 300, and causes the data storage to store the data so as to be read out timely. The data reproducing unit timely reads out the image data stored in the data storage to output the image.

### [Operation of AV Data Reproduction System]

Next, the operation of the reproduction system 100 will be described with reference to the related drawings. In the following description, a case where the delay time Da of the audio reproducer 400A is 4 msec; the delay time Db, Dd of the audio reproducers 400B and 400D is 5 msec; and the delay time Dc of the audio reproducer 400C is 3 msec, will be exemplified.

### (Frame Data Transmitting Process in Data Transmitting Device)

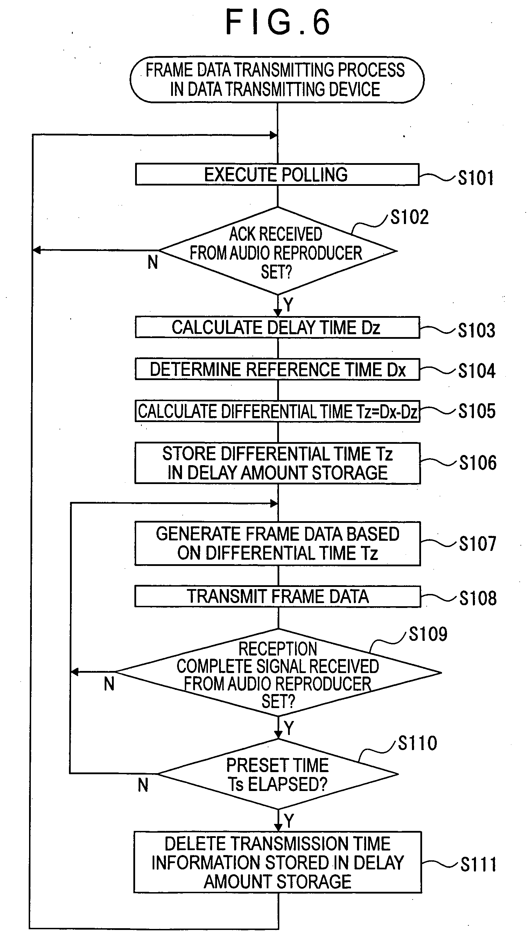

First of all, as the operation of the reproduction system 100, the transmission process of the frame data 50n in the data transmitting device 300 will be described with reference to Fig. 6. Fig. 6 is a flowchart showing the frame data transmitting process in the data transmitting device.

As shown in Fig. 6, a user turns ON the power supply for the reproduction system 100 to supply the power. When the power is supplied, the delay amount determiner 330 of the data transmitting device 300 generates the ACK request information, and carries out the processing to transmit the generated ACK request information to the audio reproducer set 400; i.e., the polling (step S101). Here, the configuration in which the polling is carried out immediately after the power is supplied, is exemplified. However, the configuration is not limited to the above. For example, such configuration in which the polling is not carried out immediately after the power is supplied; but for example, when a setting input requesting to carry out the polling is made by the user, the polling is carried out, may be employed.

After that, the delay amount determiner 330 carries out the processing to determine whether or not the ACKs have been received from the audio reproducer set 400 (step S102).

In step S102, when it is determined that the ACKs have not been received from audio reproducer set 400, the processing returns to step S101.

On the other hand, in step S102, when it is determined that the ACKs have been received from the audio reproducer set 400, the delay amount determiner 330 calculates the delay times Dz based on the necessary time from a point when the polling is carried out to a point when the respective ACKs of the audio reproducers 400A, 400B, 400C and 400D are acquired (step S103). And the calculated delay times Dz are stored in the delay amount storage 320 so as to be read out timely.

Then, when the delay amount determiner 330 recognizes that delay times Dz have been stored in the delay amount storage 320, the delay amount determiner 330 determines the longest delay time in the stored delay times Dz as the reference time Dx (step S104). Here, 5 msec of the delay times Db and Dd is determined as the reference times Dx.

After that, the delay amount determiner 330 calculates the differential times Tz of the audio reproducers 400A, 400B, 400C and 400D based on the delay times Dz calculated in step S103 and the reference times Dx determined in step S104 (step S105). Here the differential time Ta is 1 msec; the differential times Tb and Td are 0 msec; and the differential time Tc is 2 msec. And these calculated differential times Tz are stored in the delay amount storage 320 so as to be read out timely (step S106).

After that, the data transmitting device 300 causes the delay amount controller 360 and the packet generator 370 to generate the frame data 50n based on the differential times Tz stored in the delay amount storage 320 (step S107).

Specifically, first of all, the data transmitting device 300 causes the delay amount controller 360 to generate output request information requesting to output audio data SA, SB, SC and SD at the times based on the differential times Tz. And then, the generated output request information is made to output to the delay units 350A, 350B, 350C and 350D. Here, the output request information written with the information requesting to output the audio data SA to the delay unit 350A 1 msec later from the signal output reference time; the information requesting to output the audio data SB and SD to the delay units 350B and 350D at the signal output reference time; and the information requesting to output the audio data SC to the delay unit 350C 2 msec later from the signal output reference time is generated.

When the delay units 350A, 350B, 350C and 350D acquire the output request information, the delay units 350A, 350B, 350C and 350D timely output the audio data SA, SB, SC and SD, which are input to the audio input terminals 340A, 340B, 340C and 340D, to the packet generator 370 at the times based on the acquired output request information. Here, the delay unit 350A outputs the audio data SA 1 msec later from the signal output reference time; the delay unit 350B and 350D output the audio data SB and SD at the signal output reference time; and the delay unit 350C outputs the audio data SC 2 msec later from the signal output reference time.

When the packet generator 370 acquires the audio data SA, SB, SC and SD from the delay units 350A, 350B, 350C and 350D, the packet generator 370 generates the frame data 501, 502, ... based on the times to acquire the audio data SA, SB, SC and SD. Here, since the differential time Ta is 1 msec; the differential times Tb and Td are 0 msec; and the differential time Tc is 2 msec, the frame data 501, 502, ... shown in the part (B) in Fig. 3 are generated. And the frame data 501, 502, ... are transmitted to the audio reproducers 400A, 400B, 400C and 400D at the intervals of, for example, 1 msec from the frame output time (step S108).

After that, the data transmitting device 300 causes the packet generator 370 to determine whether or not the reception complete signals, which are written with the fact that the frame data 50n are received, have been received from the audio reproducer set 400 in a predetermined time (step S 109).

In step S109, when it is determined that the reception complete signals have not been received from audio reproducer set 400, the processing returns to step S107. In this step S107, the packet generator 370 recognizes the frame data 50n, which at least any one device of audio reproducer set 400 has failed to receive, based on the reception complete signal. And the recognized frame data 50n is transmitted to the audio reproducers 400A, 400B, 400C and 400D again.

On the other hand, when the packet generator 370 determines that the reception complete signals have been received from audio reproducer set 400 in step S109, the delay amount determiner 330 determines whether or not that, for example, the time from the delay times Dz are calculated has exceeded; for example, 5 minutes of the preset time Ts (step S110). Here, the configuration, in which it is determined whether or not that the time from the delay times Dz are calculated has exceeded the preset time Ts, is exemplified. The configuration is not limited to the above. Such configuration that, for example, it is determined whether or not that the time from the time when the differential times Tz are stored in the delay amount storage 320 or the time when the polling is carried out or the like has exceeded the preset time Ts, may be employed. Also, such configuration that the preset time Ts is 5 minutes is exemplified. However, the configuration is not limited to the above. For example, the preset time Ts may be set to 10 minutes or 30 minutes.

In step S110, when the delay amount determiner 330 determines that the preset time Ts is not exceeded, the process returns to step S107. On the other hand, in step S110, when the delay amount determiner 330 determines that the preset time Ts has been exceeded, the transmission time information stored in the delay amount storage 320, i.e., the delay times Dz and differential times Tz are deleted (step S111). And the process returns to step S101 and the polling is carried out again.

### (Frame Data Receiving Process in Audio Reproducer)

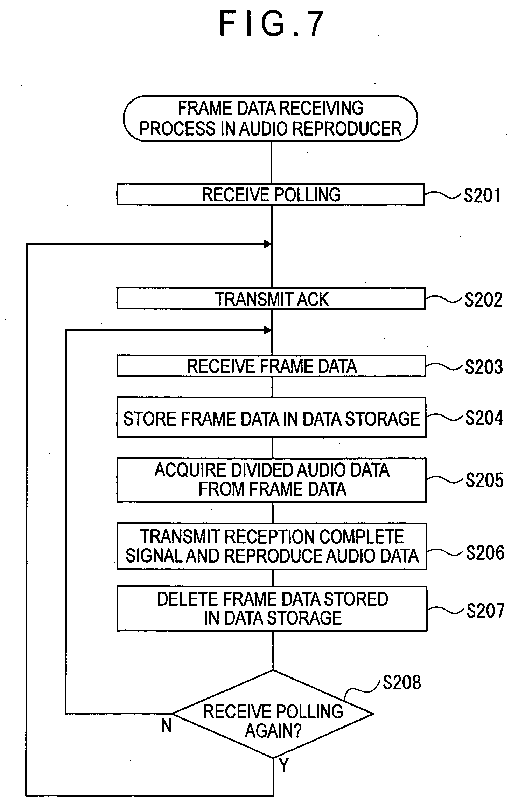

Next, as the operation of the reproduction system 100, the reception processing of the frame data 50n in the audio reproducer set 400 will be described with reference to Fig. 7. Fig. 7 is a flowchart showing the frame data receiving process in the audio reproducer.

As shown in Fig. 7, for example, when the audio reproducer 400A recognizes that the ACK generator 431 has received ACK request information; i.e., a polling, which is transmitted from the data transmitting device 300 (step S201), the audio reproducer 400A generates an ACK. The generated ACK is transmitted to the data transmitting device 300 (step S202). The audio reproducers 400B, 400C and 400D also carry out the processing from step S201 to step S203.

After that, when the communication unit 410 receives the frame data 501, 502, ... shown in the part (B) in Fig. 3, which are transmitted from the data transmitting device 300 (step S203), the audio reproducers 400A, 400B, 400C and 400D cause the data storage 420 to store the received frame data 501, 502, ... so as to be read out timely (step S204). As described above, the frame data 501, 502, ... are transmitted from the data transmitting device 300 at 1 msec intervals from the frame output time. Since the delay time Da is 4 msec; the delay times Db and Dd are 5 msec; and the delay time Dc is 3 msec, the audio reproducer 400C receives the frame data 501, 3 msec later from the frame output time; the audio reproducer 400A receives the frame data 501, 4 msec later from the frame output time; and the audio reproducers 400B and 400D receive the frame data 501, 5 msec later from the frame output time. After that, the audio reproducers 400A, 400B, 400C and 400D receive the frame data 502, 503, ... sequentially every 1 msec.

And, for example, when the reproduction controller 433 recognizes that the frame data 501, 502, ... have been stored in the data storage 420, the audio reproducer 400A timely acquires the divided audio data SA1, SA2, ... stored in the frame data 501, 502, ... (step S205). And the reception complete signal is transmitted to the data transmitting device 300, and the audio data SA is reproduced based on the divided audio data SA1, SA2, ... (step S206).

Specifically, based on the receiver numbers 521C, 522C, ..., the audio reproducer 400A acquires the packet data 521, 522, ... timely from the frame data 501, 502, ... using the reproduction controller 433. Here, since the frame data 501, 502, ... as shown in the part (B) in Fig. 3 have been received, the packet data 521 is acquired from the frame data 502, which has been received 1 msec later from the time when the frame data 501 is received; i.e., 5 msec later from the frame output time based on the receiver number 521C. Also, the packet data 522, 523, ... are acquired from the frame data 503, 504, ..., which are received 6, 7, ... msec later from the frame output time. And the reproduction controller 433 acquires the divided audio data SA1, SA2, ... based on the segment number 521D, 522D, ... in the acquired packet data 521, 522, .... After that, the reproduction controller 433 carries out a processing to combine the divided audio data SA2 with the tail position of the divided audio data SA1. Further, the processing to combine the divided audio data SA3, SA4, ... with the tail position of the divided audio data SA2, SA3, ... is carried out timely. Owing to this, following the divided audio data SA1, the divided audio data SA2, SA3, SA4, ... are output consecutively from the data output section 432. Further, the reproduction controller 433 timely generates the reception complete signal informing the fact that the frame data 501 has been received, the fact that the frame data 502 has been received and the like, and transmits the information timely to the data transmitting device 300.

The reproduction controller 433 causes the data output section 432 to output divided audio data SA1, which are the header portion of the audio data SA as sounds at the time when the frame data 502 stored with the packet data 521 are acquired; i.e., at the time when, for example, a predetermined time U has further elapsed from the time 5 msec later from the frame output time. That is to say, the reproduction controller 433 starts the reproduction processing of the audio data SA at the time when 5 msec and the predetermined time U has passed from the frame output time. After that, the data output section 432 is made to output the divided audio data SA2 combined with the tail position of the divided audio data SA1, the divided audio data SA3 combined with the tail position of the divided audio data SA2, and the like successively. Owing to this, the audio data SA are output from the data output section 432.

The audio reproducers 400B, 400C and 400D also carry out the processing step S205 and step S206. Here, the audio reproducers 400B, 400C and 400D also have received the frame data 501, 502, ... shown in the part (B) in Fig. 3.

Owing to this, the audio reproducer 400B acquires the packet data 531 from the frame data 501, which have been received 5 msec later from the frame output time. And the packet data 532, 533, ... are acquired from the frame data 502, 503, ..., which have been received 6, 7, ... msec later from the frame output time. The processing to combine the divided audio data SB1, SB2, SB3, ..., which are stored in the acquired packet data 531, 532, 533, ..., with each other is carried out appropriately.

Also, the audio reproducer 400C acquires the packet data 541 from the frame data 503, which have been received 2 msec later from the time when the frame data 501 are received; i.e., 5 msec later from the frame output time. And the packet data 542, 543, ... are acquired from the frame data 504, 505, ..., which have been received 6, 7, ... msec later from the frame output time, and the processing to combine the divided audio data SC1, SC2, SC3, ..., which are stored in the acquired packet data 541, 542, 543, ..., with each other is carried out appropriately.

Further, the audio reproducer 400D acquires the packet data 551 from the frame data 501, which have been received 5 msec later from the frame output time. And the packet data 552, 553, ... are acquired from the frame data 502, 503, ..., which have been received 6, 7, ... msec later from the frame output time, and the processing to combine the divided audio data SD1, SD2, SD3, ..., which are stored in the acquired packet data 551, 552, 553, ..., with each other is carried out appropriately.

After that, same as the audio reproducer 400A, the audio reproducers 400B, 400C and 400D generate the reception complete signal timely and transmit the signal to the data transmitting device 300. Also, the audio reproducer 400B, 400C and 400D cause the data output section 432 to output the divided audio data SB1, SC1 and SD1, which are the header portion of the audio data SB, SC and SD, as sounds at the time when the frame data 501, 503 and 501, which are stored with the packet data 531, 541 and 551, are acquired; i.e., at the time when a predetermined time U has further elapsed from the time when 5 msec has elapsed from the frame output time. That is, the reproduction controller 433 starts the reproduction processing of the audio data SB, SC and SD at the time when 5 msec and the predetermined time U have elapsed from the frame output time.

After that, for example, the audio reproducer 400A timely deletes the frame data 501, 502, ... stored in the data storage 420 using the reproduction controller 433 (step S207). And the audio reproducer 400A determines whether or not the ACK generator 431 has received the polling again (step S208).

In step S208, when it is determined that the polling has been received, the processing returns to step S202 and an ACK is generated and transmitted to the data transmitting device 300. And the processing from step S203 to step S208 is carried out.

On the other hand, in step S208, when it is determined that the polling has not been received, the processing returns to step S203 and the audio reproducer 400A receives the frame data 50n transmitted from the data transmitting device 300 using the communication unit 410. And the processing from step S204 to step S208 is carried out.

The audio reproducers 400B, 400C and 400D also carry out the processing step S207 and step S208.

According to the above-described embodiment, the data transmitting device 300 in the reproduction system 100 calculates the delay time Da of the audio reproducer 400A as, for example, 4 msec; the delay time Db and Dd of the audio reproducers 400B and 400D as, for example, 5 msec; and the delay time Dc of the audio reproducer 400C as, for example, 3 msec using the delay amount determiner 330. And based on the delay times Dz, the differential time Ta of the audio reproducer 400A is calculated as 1 msec; the differential times Tb and Td of the audio reproducers 400B and 400D are calculated as 0 msec; and the differential time Tc of the audio reproducer 400C is calculated as 2 msec. After that, the delay amount controller 360 generates the output request information based on the differential times Tz. And the delay processor 350 and packet generator 370 delay the divided audio data SA1, SB1, SC1 and SD1 based on the output request information and transmits the information to the audio reproducer set 400. Specifically, the packet generator 370 transmits the packet data 531 and 551 stored with the divided audio data SB1 and SD1 to the audio reproducers 400B and 400D at the time when 0 msec as the differential times Tb and Td has elapsed from the frame output time; i.e., at the frame output time. Also, the packet data 521 stored with the divided audio data SA1 is transmitted to the audio reproducer 400A at the time when 1 msec as the differential time Ta has elapsed from the frame output time. Further, the packet data 541 stored with the divided audio data SC1 is transmitted to the audio reproducer 400C at the time when 2 msec as the differential time Tc has elapsed from the frame output time.

Accordingly, the data transmitting device 300 causes the audio reproducers 400B and 400D to receive packet data 531 and 551 at the time when 5 msec as the delay times Db and Dd has elapsed from the time when the packet data 531 and 551 are transmitted; i.e., at the time when the 5 msec has elapsed from the frame output time. Also, the audio reproducer 400A is made to receive the packet data 521 at the time when 4 msec as the delay time Da has elapsed from the time when the packet data 521 is transmitted; i.e., at the time when 5 msec has elapsed from the frame output time. Further, the audio reproducer 400C is made to receive the packet data 541 at the time when the 3 msec as the delay time Dc has elapsed from the time when the packet data 541 is transmitted; i.e., at the time when 5 msec has elapsed from the frame output time. That is to say, the data transmitting device 300 causes the audio reproducers 400A, 400B, 400C and 400D to receive the divided audio data SA1, SB1, SC1 and SD1 stored in the packet data 521, 531, 541 and 551 at the time when 5 msec has elapsed from the frame output time. Accordingly, the data transmitting device 300 causes the audio reproducers 400A, 400B, 400C and 400D to output the divided audio data SA1, SB1, SC1 and SD1, which are the header portions of the audio data SA, SB, SC and SD at the same time.

Also, the data transmitting device 300 acquires audio data SA, SB, SC and SD, which are input from the AV data output equipment, using the audio data input unit 340. And the packet generator 370 timely transmits the divided audio data SAh, SBi, SCj and SDk of the audio data SA, SB, SC and SD, which are acquired by the audio data input unit 340, to the audio reproducer set 400. Owing to this, since it is not necessary to provide any storage for storing the audio data SA, SB, SC and SD to the data transmitting device 300, the configuration of the data transmitting device 300 can be simplified. Also, the cost of the data transmitting device 300 can be reduced and the data transmitting device 300 can be miniaturized.

The data transmitting device 300 is provided with the delay amount storage 320, which stores the delay times Dz calculated by the delay amount determiner 330. Using the delay processor 350 and the packet generator 370, the data transmitting device 300 delays the divided audio data SA1, SB1, SC1 and SD1 based on the differential times Tz, which are calculated from the delay times Dz stored in the delay amount storage 320, and transmits the data timely to the audio reproducer set 400. Owing to this, for example, when transmitting the divided audio data SA1, SB1, SC1 and SD1 of the audio data SA, SB, SC and SD of a new music composition, the data transmitting device 300 can use the differential times Tz, which are calculated from the delay times Dz stored in the delay amount storage 320; thus, it is possible to eliminate the processing to newly calculate the delay times Dz using the delay amount determiner 330. Accordingly, the processing to transmit the divided audio data SA1, SB1, SC1 and SD1 can be carried out more swiftly.

The data transmitting device 300 calculates the delay times Dz first using the delay amount determiner 330, and then, determines whether or not the preset times Ts are exceeded. And when it is determined as exceeded, the data transmitting device 300 calculates the delay times Dz again. Owing to this, even when the delay times Dz have altered, the data transmitting device 300 can delay the divided audio data SA1, SB1, SC1 and SD1 based on the differential times Tz, which are calculated from the recalculated appropriate delay times Dz and transmit the data timely to the audio reproducer set 400. Accordingly, the data transmitting device 300 can cause the audio reproducers 400A, 400B, 400C and 400D to carry out the processing to output the divided audio data SA1, SB1, SC1 and SD1 at the same time more appropriately. As for the cause why the delay times Dz alter, it is conceivable as one example. That is, for example, in such configuration that the network 200 includes a radio medium, between the data transmitting device 300 and, for example, the audio reproducer 400A, a foreign object is disposed altering the transmission path of the frame data 50n.

The data transmitting device 300 generates the ACK request information using the delay amount determiner 330 and transmits the information to the audio reproducer set 400. And the delay times Dz are calculated from the necessary time from the time when the ACK request information is transmitted to the time when the ACK is acquired. And when the audio reproducers 400A, 400B, 400C and 400D acquire the ACK request information using the ACK generator 431, the ACK is made to generate and transmitted to the data transmitting device 300. Owing to this, the delay amount determiner 330 can calculate the delay times Dz in such simple manner; i.e., by just recognizing that the necessary time from the time when the ACK request information is generated and transmitted to the audio reproducer set 400 to the time when the ACK is acquired. Accordingly, the processing to calculate the delay times Dz more swiftly. Also, the configuration of the delay amount determiner 330 can be simplified.

The data transmitting device 300 determines whether or not the reception complete signal, which informs the fact that the frame data 50n have been received, has been received from audio reproducer set 400 using the packet generator 370. And when it is determined as not received, the frame data 50n are transmitted again. Also, when the audio reproducers 400A, 400B, 400C and 400D receive the frame data 50n using the reproduction controller 433, the reception complete signal is generated and transmitted to the data transmitting device 300. Owing to this, when at least any one of the devices in the audio reproducer set 400 fails in receiving, data transmitting device 300 transmits the frame data 50n again. Thus, it is possible to cause the audio reproducer set 400 to reliably receive all frame data 50n. Accordingly, since the data transmitting device 300 causes the audio reproducers 400A, 400B, 400C and 400D to receive every divided audio data SAh, SBi, SCj and SDk, the audio data SA, SB, SC and SD can be output without interruption

Using the packet generator 370, the data transmitting device 300 generates the frame data 50n, 50(n+1), ..., in which packet data 52h, 53i, 54j and 54k stored with the divided audio data SAh, SBi, SCj and SDk are included, based on the differential times Tz calculated from the delay times Dz, and transmits the data to the audio reproducer set 400. And, for example, using the reproduction controller 433, the audio reproducer 400A acquires the frame data 50n, 50(n+1), ... transmitted from the data transmitting device 300, and the packet data 52h, 52(h+1), ... are identified from the acquired frame data 50n, 50(n+1), ... . After that, the reproduction controller 433 acquires divided audio data SAh, SA(h+1), ..., stored in the packet data 52h, 52(h+1), ... . Further, the audio reproducer 400B, 400C and 400D are also provided with the same function as that of the audio reproducer 400A.

Owing to this, with one transmission of the frame data 50n using the packet generator 370, the data transmitting device 300 can cause the audio reproducers 400A, 400B, 400C and 400D to acquire the divided audio data SAh, SBi, SCj and SDk timely and simultaneously. Accordingly, compared to such configuration that the packet data 52h, 53i, 54j and 55k stored with the divided audio data SAh, SBi, SCj and SDk are transmitted independently, the number of the transmission of the data can be reduced; and thus, the load of the packet generator 370 can be reduced.

Further, the data transmitting device 300 transmits the frame data 50n, in which divided audio data SAh, SBi, SCj and SDk including the audio data SA, SB, SC and SD divided into plural pieces, to the audio reproducer set 400. And for example, the audio reproducer 400A combines the divided audio data SAh, SA(h+1), ... acquired from the frame data 50n, 50(n+1), ..., with each other, and outputs the data from the data output section 432 as the audio data SA. Further, the audio reproducers 400B, 400C and 400D are also provided with the same function as that of the audio reproducer 400A. Owing to this, since the data transmitting device 300 divides the audio data SA, SB, SC and SD into plural pieces and transmits the data to the audio reproducer set 400, when the data transmitting device 300 recognizes that, for example, the audio reproducer 400A has failed in receiving the frame data 50n stored with divided audio data SAh, the frame data 50n can be compensated by transmitting the recognized frame data 50n only again. Accordingly, when the above condition is recognized, the data amount to be transmitted again can be minimized. Also, since the data amount per transmission from the data transmitting device 300 can be reduced, for example, even when the network 200 is under congestion, the audio data SA, SB, SC and SD can be transmitted to the audio reproducer set 400 swiftly.

For example, the audio reproducer 400A recognizes the order of the divided audio data SAh in the audio data SA based on, for example, the segment number 52hD of the packet data 52h using the reproduction controller 433. The divided audio data SAh, SA(h+1), ...are combined with each other in the recognized order to generate the audio data SA. Owing to this, the reproduction controller 433 can generate the audio data SA from the divided audio data SAh, SA(h+1), ... in such simple manner as just referring to the segment number 52hD of the packet data 52h. Accordingly, the processing to generate the audio data SA from the divided audio data SAh, SA (h+1) ... can be carried out more swiftly.

### [Modification of Embodiment]

The present invention is not limited to the above described embodiments, but the following modifications are included therein within a range where the object of the present invention is achieved.

The following configuration has been exemplified; i.e., the audio data input unit 340 for acquiring the audio data SA, SB, SC and SD, which are input from the AV data output equipment, is provided to the data transmitting device 300. However, for example, the following configuration may be employed. That is, in place of providing the audio data input unit 340, such configuration that, for example, a storage for storing the AV data is provided, and the packet generator 370 transmits the audio data SA, SB, SC and SD of the AV data stored in the storage to the audio reproducer set 400, may be employed. By adopting the configuration as described above, the process to connect between the AV data output equipment and the audio data input unit 340 can be eliminated resulting in an enhanced user-friendliness of the data transmitting device 300.

The following configuration has been exemplified; i.e., the data transmitting device 300 is provided with the delay amount storage 320 for storing the delay times Dz. However, for example, the following configuration may be adopted. That is, in place of providing the delay amount storage 320, for example, such configuration may be adopted; i.e., every time when the delay processor 350 and the packet generator 370 carry out the processing to generate the frame data 50n including new audio data SA, SB, SC and SD of a music composition, the delay amount determiner 330 calculates the delay times Dz, and the frame data 50n are generated based on the calculated delay times Dz. By adopting the configuration as described above, since it is not necessary to provide the delay amount storage 320 to the data transmitting device 300, the configuration of the data transmitting device 300 can be simplified. Also, the cost of the data transmitting device 300 can be reduced as well as the data transmitting device 300 can be miniaturized. Further, since the data transmitting device 300 generates and transmits the frame data 50n based on the latest delay times Dz, the processing to cause the audio reproducers 400A, 400B, 400C and 400D to output the divided audio data SA1, SB1, SC1 and SD1 at the same time can be carried out more appropriately.

The following configuration has been exemplified; i.e., when the preset time Ts has elapsed after the delay times Dz are calculated, the delay amount determiner 330 in the data transmitting device 300 calculates the delay times Dz again. However, the configuration is not limited to the above, but, for example, the following configuration may be adopted. That is, for example, the following configuration may be adopted; i.e., every time when the transmission of the audio data SA, SB, SC and SD of one or plural music compositions has completed, the delay times Dz are calculated. By adopting such configuration, since the delay amount determiner 330 does not have to acquire the current time timely from the timer, the load of the delay amount determiner 330 can be reduced.

Further, the following configuration may be adopted; i.e., once the delay times Dz are calculated, the delay times Dz are not calculated until, for example, the power supply is turned OFF and ON again. By adopting such configuration, since it is possible to reduce the number of times when the delay amount determiner 330 is made to calculate the delay times Dz, the load of the delay amount determiner 330 can be reduced.

The following configuration has been exemplified; i.e., the delay amount determiner 330 in the data transmitting device 300 calculates the delay times Dz based on the necessary time from the time when ACK request information is transmitted to the time when the ACKs are received. However, the configuration is not limited to the above, but, for example, the following configuration may be adopted. That is, for example, such configuration may be adopted: i.e., a user sets and inputs the distance from the data transmitting device 300 to the audio reproducer set 400, and the length of a wire medium connecting the data transmitting device 300 and the audio reproducer set 400 therebetween and the like, the delay times Dz are calculated based on the input values. By adopting such configuration, it is not necessary to provide the delay amount determiner 330 with such function to generate and transmit the ACK request information. Also, it is not necessary to provide the audio reproducer set 400 with the ACK generator 431. Owing to this, the configuration of the data transmitting device 300 and the audio reproducer set 400 can be simplified.

The following configuration has been exemplified; i.e., there is provided with such function that, when it is determined that the packet generator 370 in the data transmitting device 300 has not received the reception complete signal from the audio reproducer set 400, a frame data 50n, which at least any one of the audio reproducer set 400 has failed in receiving, is transmitted again. However, a configuration without the above function may be adopted. By adopting such configuration, it is not necessary to provide the packet generator 370 with such function to recognize whether or not the reception complete signal has been received to transmit the frame data 50n again. Further, it is not necessary to provide the reproduction controller 433 in the audio reproducer set 400 with such function to generate the reception complete signal to transmit the signal to the data transmitting device 300. Owing to this, the configuration of the data transmitting device 300 and the audio reproducer set 400 can be simplified.

The following configuration has been exemplified; i.e., for example, the reproduction controller 433 in the audio reproducer 400A recognizes the order of the divided audio data SAh, SA(h+1), ... based on, for example, segment numbers 52hD, 52(h+1)D ... of the packet data 52h, 52(h+1), ... . And the divided audio data SAh, SA(h+1), ... are combined with each other in accordance with the recognized order to generate the audio data SA. However, for example, such configuration may be adopted; i.e., for example, the divided audio data SAh, SA(h+1), ... are combined with each other based on the order the packet data 52h, 52(h+1), ... stored in the data storage 420 to generate the audio data SA. By adopting such configuration, for example, since it is not necessary to store the segment number 52hD in the packet data 52h, the data amount of the packet data 52h can be reduced. Owing to this, the generation process and the transmission process of the frame data 50n can be carried out more swiftly.

Further, the following configuration has been exemplified; i.e., the data transmitting device 300 divides the audio data SA, SB, SC and SD to a plurality of divided audio data SAh, SBi, SCj and SDk, and these divided audio data SAh, SBi, SCj and SDk are transmitted to the audio reproducer set 400 stored with frame data 50n. However, for example, the following configuration may be adopted.

That is, in place of providing the packet generator 370, the following configuration may be adopted; i.e., the audio data SA, SB, SC and SD, which are delayed based on the differential times Tz and output from the delay processor 350, are transmitted directly to the corresponding audio reproducer 400A, 400B, 400C and 400D. In such configuration also, owing to substantially the same effect as that in the above-described embodiment, the data transmitting device 300 can cause the audio reproducers 400A, 400B, 400C and 400D to receive the audio data SA, SB, SC and SD at the substantially same time. Owing to this, the data transmitting device 300 can cause the audio reproducers 400A, 400B, 400C and 400D to output the audio data SA, SB, SC and SD at the substantially same time. Further, since it is not necessary to provide packet generator 370 to the data transmitting device 300, the configuration of the data transmitting device 300 can be simplified. Furthermore, compared to such configuration that the frame data 50n stored with divided audio data SAh, SBi, SCj and SDk are transmitted, the data amount received by the audio reproducer set 400 can be reduced. Owing to this, since the capacity of the data storage 420 in the audio reproducer set 400 can be reduced, the cost of the audio reproducer set 400 can be reduced.

Further, in place of such configuration that the packet generator 370 incorporates the packet data 52h, 53i, 54j and 55k in the frame data 50n, the following configuration may be adopted; i.e., the packet data 52h, 53i, 54j and 55k corresponding to the audio reproducers 400A, 400B, 400C and 400D are delayed and transmitted based on the differential times Tz. In such configuration also, owing to the substantially same effect as the above-described embodiment, the data transmitting device 300 can cause the audio reproducers 400A, 400B, 400C and 400D to receive the divided audio data SAh, SBi, SCj and SDk at the same time. Owing to this, the data transmitting device 300 can cause the audio reproducers 400A, 400B, 400C and 400D to output the divided audio data SA1, SB1, SC1 and SD1, which are the header portion of the audio data SA, SB, SC and SD, at the same time. Also, since it is not necessary to provide the packet generator 370 in the data transmitting device 300 with such function to generate frame data 50n including the packet data 52h, 53i, 54j and 55k, the configuration of the data transmitting device 300 can be simplified. Further, in the packet generator 370, since the processing to generate the frame data 50n can be eliminated, the processing to transmit the packet data 52h, 53i, 54j and 55k can be carried out more swiftly. Also, compared to such configuration that the packet data 52h, 53i, 54j and 55k are transmitted as the frame data 50n, the data amount to be received by the audio reproducer set 400 can be reduced. Owing to this, since the capacity of the data storage 420 in the audio reproducer set 400 can be reduced, the cost of the audio reproducer set 400 can be reduced.

The following configuration have been exemplified; i.e., the audio data SA, SB, SC and SD, which are input from the AV data output equipment via the audio data input unit 340, are delayed by the delay processor 350 based on the differential times Tz and outputted to the packet generator 370. However, the configuration is not limited to the above, but, for example, the following configuration may be adopted. That is, such configuration may be adopted; i.e., in place of providing the delay processor 350, the audio data input unit 340 and the packet generator 370 are directly connected to each other. Also, the delay amount controller 360 and the packet generator 370 are connected to each other. And the packet generator 370 acquires the output request information, which is generated by the delay amount controller 360, and generates the frame data 50n including the packet data 52h, 53i, 54j and 55k based on the differential times Tz to transmit the data to the audio reproducer set 400. Further in place of providing the packet generator 370 with the function to generate the frame data 50n, such configuration may be adopted; i.e., the packet data 52h, 53i, 54j and 55k corresponding to the audio reproducers 400A, 400B, 400C and 400D are delayed and transmitted based on the differential times Tz . In such configuration, owing to substantially the same effect as that in the above embodiment, the data transmitting device 300 can cause the audio reproducers 400A, 400B, 400C and 400D to receive the divided audio data SAh, SBi, SCj and SDk at the same time. Owing to this, the data transmitting device 300 can cause the audio reproducers 400A, 400B, 400C and 400D to output the divided audio data SA1, SB1, SC1 and SD1, which are the header portion of the audio data SA, SB, SC and SD at the same time. Further, since it is not necessary to provide the data transmitting device 300 with the delay processor 350, the configuration of the data transmitting device 300 can be simplified.

The following reproduction system 100 has been exemplified; i.e., the audio data SA, SB, SC and SD are output from each of the audio reproducers 400A, 400B, 400C and 400D at the same time. However, the configuration is not limited to the above, but, for example, the following configuration may be adopted. That is, in addition to the delay times Dz of the audio reproducers 400A, 400B, 400C and 400D, the delay amount determiner 330 in the data transmitting device 300 calculates the delay time De of the image reproducer. Then, the delay amount controller 360 generates the output request information based on the delay time De and the delay times Dz. And the delay processor 350, the packet generator 370 and the like generate packet data stored with divided image data, in which the image data are divided into a plurality of pieces, and frame data 50n appropriately including the packet data 52h, 53i, 54j and 55k based on the output request information. After that, the generated frame data 50n may be transmitted to the audio reproducers 400A, 400B, 400C and 400D and the image reproducer. By adopting such configuration, the audio data SA, SB, SC and SD, and the image data can be output from the audio reproducers 400A, 400B, 400C the 400D and the image reproducer at the same time. Owing to this, the versatility of the reproduction system 100 can be further increased.

Further, the present invention may be applied to such configuration that control signals as data, which are transmitted from a control signal transmitting device as data transmitting device, are output from the controller as a plurality of output devices at the same time.

Each of the above-described functions is achieved as the programs. However, for example, the functions may be built in a piece of hardware such as a circuit board, or in one device such as IC (Integrated Circuit). Any mode of the configuration is available. When such configuration that the functions are read out from a programs or a separate recording medium is adopted, since they are easy to handle, the usage range thereof can be expanded easily.

Particular structures and steps for carrying out the present invention may be appropriately modified to another structure and the like within a range that the object of the present invention is achieved.

### [Effect of Embodiment]

As described above, according to the above described embodiment, using the delay amount determiner 330, the data transmitting device 300 in the reproduction system 100 performs the calculation as described below. That is, the delay time Da of the audio reproducer 400A is calculated as, for example, 4 msec; the delay times Db and Dd of the audio reproducers 400B and 400D are calculated as, for example, 5 msec; and the delay time Dc of the audio reproducer 400C is calculated as, for example, 3 msec. And the packet generator 370 delays the divided audio data SA1, SB1, SC1 and SD1 based on the differential times Tz, which are calculated based on the delay times Dz, and transmits the data to the audio reproducers 400A, 400B, 400C and 400D. Specifically, the packet generator 370 transmits the packet data 531 and 551 stored with the divided audio data SB1 and SD1 to the audio reproducers 400B and 400D at the time when 0 msec as the differential times Tb and Td has elapsed from the frame output time; i.e., at the frame output time. Also, the packet data 521 stored with the divided audio data SA1 are transmitted to the audio reproducer 400A at the time when 1 msec as the differential time Ta has elapsed from the frame output time; and further the packet data 541 stored with the divided audio data SC1 are transmitted to the audio reproducer 400C at the time when 2 msec as the differential time Tc has elapsed from the frame output time.

Owing to this, the data transmitting device 300 causes the audio reproducers 400B and 400D to receive the packet data 531 and 551 at the time when 5 msec as the delay times Db and Dd has elapsed from the time when the packet data 531 and 551 are transmitted; i.e., at the time when 5 msec has elapsed from the frame output time. Also, the audio reproducer 400A is made to receive the packet data 521 at the time when the 4 msec as the delay time Da has elapsed from the time when the packet data 521 is transmitted; i.e., at the time when 5 msec has elapsed from the frame output time. Further, the audio reproducer 400C is made to receive the packet data 541 at the time when 3 msec as the delay time Dc has elapsed from the time when the packet data 541 is transmitted: i.e., at the time when 5 msec has elapsed from the frame output time. That is to say, the data transmitting device 300 can cause the audio reproducers 400A, 400B, 400C and 400D to receive the divided audio data SA1, SB1, SC1 and SD1 stored in the packet data 521, 531, 541 and 551 at the time when 5 msec has elapsed from the frame output time. Accordingly, the data transmitting device 300 can cause the audio reproducers 400A, 400B, 400C and 400D to output the divided audio data SA1, SB1, SC1 and SD1, which are the header portions of the audio data SA, SB, SC and SD, at the same time.

## Claims

1. A data transmitting device for transmitting data to a plurality of output devices for outputting the data via a network, the device comprising:
a transmission time determiner for calculating transmission time of the data for each of the output devices; and
a transmission controller for, when transmitting the data to each of the output devices via the network, controlling to delay the data to be transmitted to each of the output devices based on the transmission time.

2. The data transmitting device according to claim 1, further comprising:
a data acquiring section for acquiring the data,
wherein the transmission controller causes the data acquired by the data acquiring section to delay based on the transmission time and transmits the data to each of the output devices via the network.

3. The data transmitting device according to claim 1 or 2, further comprising:
a storage for storing the transmission time,
wherein the transmission time determiner causes the storage to store the transmission time, and
wherein the transmission controller causes the data to delay based on the transmission time stored in the storage and transmits the data to each of the output devices via the network.

4. The data transmitting device according to any one of claims 1 to 3, wherein the transmission time determiner determines whether or not a predetermined period of time has elapsed from a time when the transmission time is calculated, and when it is determined that the predetermined period of time has elapsed, calculates the transmission time again.

5. The data transmitting device according to any one of claims 1 to 4, wherein the transmission time determiner generates confirmation request information requesting a transmission of reception confirmation information, transmits the generated confirmation request information to each of the output devices via the network, receives the reception confirmation information transmitted from each of the output devices via the network, and calculates the transmission time of the data to each of the output devices based on a difference between the time when the confirmation request information is transmitted and the time when the reception confirmation information is received.

6. The data transmitting device according to any one of claims 1 to 5, wherein the transmission controller determines whether or not data reception information informing the fact that the data are received from each of the output devices has been received, and when it is determined that the data reception information has not been received from each of the output devices yet, transmits the data to each of the output devices again.

7. The data transmitting device according to any one of claims 1 to 6, further comprising:
a divided data generator for generating divided data in which the data are divided to a plurality of pieces,
wherein the transmission controller, when transmitting the divided data to each of the output devices via the network, controls the divided data to be transmitted to each of the output devices to delay based on the transmission time.

8. The data transmitting device according to claim 7,
wherein the divided data generator generates a plurality of frame data including the divided data to be transmitted to each of the output devices based on the transmission time, and
wherein the transmission controller transmits the frame data to each of the output devices via the network.

9. A data processing system, comprising:
the data transmitting device according to any one of claims 1 to 4; and
a plurality of output devices, which is connected to the data transmitting device via the network so as to transmit and receive various kinds of information and provided with a data output section for acquiring the data to be transmitted from the data transmitting device and outputting the data therefrom.

10. A data processing system, comprising:
the data transmitting device according to claim 5; and
a plurality of output devices, which is connected to the data transmitting device via the network so as to transmit and receive various kinds of information, including an confirmation information generator for acquiring the confirmation request information transmitted from the data transmitting device and generating the reception confirmation information to transmit the information to the data transmitting device, and a data output section for acquiring the data transmitted from the data transmitting device and outputting the data therefrom.

11. A data processing system, comprising:
the data transmitting device according to claim 6; and
a plurality of output devices, which is connected to the data transmitting device via the network so as to transmit and receive various kinds of information, including a reception information generator for, when the data transmitted from the data transmitting device are received, generating the data reception information and transmitting the information to the data transmitting device, and a data output section for outputting the data therefrom.

12. A data processing system, comprising:
the data transmitting device according to claim 7; and
a plurality of output devices, which is connected to the data transmitting device via the network so as to transmit and receive various kinds of information, including a divided data receiver for receiving the plurality of divided data transmitted from the data transmitting device, a data generator for generating the data by combining the plurality of divided data with each other, and a data output section for outputting the data therefrom.

13. A data processing system, comprising:
the data transmitting device according to claim 8; and
a plurality of output devices, which is connected to the data transmitting device via the network so as to transmit and receive various kinds of information, including a frame data receiver for receiving the plurality of frame data transmitted from the data transmitting device, a divided data acquiring section for identifying and acquiring the divided data from the plurality of frame data, a data generator for generating the data by combining the plurality of divided data with each other, and a data output section for outputting the data therefrom.

14. The data processing system according to claim 12 or 13,
wherein the divided data are associated with order information with respect to the order of the divided data in the data, and
wherein the data generator generates the data by combining the divided data with the order based on the order information associated with the divided data.

15. A data processing method of transmitting data to a plurality of output devices for outputting the data via a network, the method comprising the steps of:
calculating transmission time of the data to each of the output devices; and
when transmitting the data to each of the output devices via the network, controlling to delay the data to be transmitted to each of the output devices based on the transmission time.

16. A data processing program executing the data processing method according to claim 15 by a computing unit.

17. A recording medium storing the data processing program according to claim 16 in a manner readable by a computing unit.
